# EUROPÄISCHE PATENTSCHRIFT

(11) **EP 2 433 834 B1**
(45) Veröffentlichungstag und Bekanntmachung des Hinweises auf die Patenterteilung: **19.06.2013**
(21) Anmeldenummer: 11007648.6
(22) Anmeldetag: 20.09.2011
(51) Int. Cl.: B60P 7/08, B60P 7/135

(54) **Vorrichtung zum Sichern von Ladegut auf einer Ladefläche**
Device for securing cargo on a cargo vehicle
Dispositif pour la fixation du chargement sur un espace de chargement

(30) Priorität: 22.09.2010 DE 102010037716
(43) Veröffentlichungstag der Anmeldung: 28.03.2012
(73) Patentinhaber: allsafe Jungfalk GmbH & Co. KG, 78234 Engen (DE)
(72) Erfinder: von Känel , Andreas, 71336 Waiblingen (DE); Limon, Andreas, 78224 Singen (DE); Stubbe, Ingolf, 78244 Gottmadingen (DE); Moll, Hubert, 78333 Stockach (DE)
(74) Vertreter: Weiss, Peter

(56) Entgegenhaltungen:
- WO-A1-02/066286
- WO-A1-2010/142856
- DE-A1- 1 964 772
- DE-A1- 19 806 706
- US-A- 3 670 664

## Beschreibung

Die Erfindung betrifft eine Vorrichtung zum Sichern von Ladegut auf einer Ladefläche entsprechend dem Oberbegriff von Anspruch 1; sowie ein entsprechendes Verfahren entsprechend dem Oberbegriff von Anspruch 13.

### Stand der Technik

Ladegut beliebiger Art wird heute in stationären und/oder bewegbaren Laderäumen, wie insbesondere Transporträumen von Flugzeugen, Schiffen oder Fahrzeugen und insbesondere in Frachträumen von Kleintransportern durch eine flächige Überdeckung, wie bspw. eine Plane, aber insbesondere durch Ladungssicherungsnetze festgelegt. Dies geschieht meist über Zurrgurte, die mit einer entsprechenden Klemmeinrichtung zusammenwirken, damit die flächige Überdeckung über das Ladegut gespannt bleibt.

Aus der DE 198 06 706 A1 ist eine Ladegut-Haltevorrichtung für ein Transportfahrzeug bekannt, wobei unter einer Dachkonstruktion eine sich waagrecht erstreckende Halterungseinrichtung vorgesehen ist, die mittels einer Verstelleinrichtung an das Ladegut zu dessen Halterung oberseitig anlegbar ist. Die Halterungseinrichtung weist einen ebenen Rahmen auf, der mit simultan bewegbaren Linearantrieben verbunden ist, die an der Wandkonstruktion vertikal orientiert vorgesehen sind.

Allerdings wirken sich derartige Überdeckung mit ihren Zurrgurten bei der Beladung des Laderaums störend aus, so dass heute daran gedacht ist, diese Ladungssicherungselemente beim Beladen des Laderaumes aus dem Zugriffsbereich des Ladegutes zu bringen. Hierzu wird bspw. in der DE 201 13 047 U1 ein System zur Sicherung einer Ladung in einem Beförderungsmittel vorgeschlagen, welches zumindest einen Spanngurt aufweist, der mittels einer Spann- und Arretierungsvorrichtung über eine Ladung spannbar ist. Dabei soll der Spanngurt mit wenigstens einem seiner Endbereiche im Bodenbereich des Beförderungsmittels befestigbar sein. Ferner weist das System wenigstens ein Zugelement auf, welches im Deckenbereich des Beförderungsmittels angeordnet ist, wobei das Zugelement in seiner Länge veränderlich ist, einer Rückzugskraft zur Decke hin unterliegt und mit wenigstens einem Ende am Spanngurt angreift.

Auch in der DE 10 2006 001 405 B4 ist eine derartige Rückholautomatik vorgesehen, wobei jedoch je zwei Expandergummibänder mit einer ausreichenden Dehnbarkeit auf beiden Seiten des Ladungssicherungsnetzes vorgesehen sind. Dies bedeutet einen hohen Aufwand. Ferner ist die Bedienbarkeit schwierig, vor allem, wenn der Laderaum bereits beladen ist.

Des weiteren ist aus der DE 20 2007 013 898 U1 eine Vorrichtung der o.g. Art bekannt, bei der eine Rückholautomatik auf einer Längsseite der Überdeckung ein Expanderseil aufweist, welches um je zwei beabstandete Umlenkrollen geführt und danach mit je einem Ende mit der Überdeckung verbunden ist.

Aus der DE 1 964 772 A1 ist eine Vorrichtung zum Verzurren einer Ladung in kastenartigen Behältern mittels eines Verzurrnetzes bekannt, wobei das über dem Laderaum ausgebreitete Verzurrnetz an höhenverstellbaren Spannelementen befestigt ist, die im wesentlichen ausserhalb der Ladefläche angeordnet sind. Diese Spannelemente sind jeweils auf Gewindespindeln verstellbar angeordnet.

Aus der WO 02/066286 A1 ist ein Ladesystem für Frachtfahrzeuge bekannt, bei dem ein streifen- oder flächenförmiges Sicherungselement zwischen teleskopierbaren Tragmasten angeordnet ist. Dabei kann in jeweils ein Mastabschnitt ein Teleskopabschnitt geführt sein, an dessen oberen Ende sich eine Umlenkrolle befindet, über die ein Seil geführt ist. Dieses Seil ist mit einem flächenförmigen Sicherungselement verbunden, was durch ein Ein- oder Ausfahren des telekopierbaren Elementes verlängert oder verkürzt wird.

### Aufgabe

Aufgabe der vorliegenden Erfindung ist es, die aus dem Stand der Technik bekannten Systeme in Bezug auf Robustheit, Alltagstauglichkeit und einfachere Bedienbarkeit (automatisierte Abläufe) signifikant zu optimieren.

### Lösung der Aufgabe

Zur Lösung der Aufgabe führt, dass den Gleitelementen zumindest ein motorischer, insbesondere elektromotorischer Antrieb bzw. eine Antriebseinheit zugeordnet ist.

Als Antriebseinheit kann ein Motor allein oder ein Motor mit Getriebe oder ein Motor mit Getriebe und weiteren Antriebselementen, wie Übertragungsmittel bezeichnet werden.

Dies bedeutet, dass ein Überdecken des Ladeguts mittels des streifen- oder flächenförmigen Sicherungselementes automatisiert geschieht. Es braucht lediglich ein Schalter betätigt zu werden, damit der gesamte Sicherungsvorgang vollautomatisch abläuft. Der Schalter kann bedient oder zum Beispiel auch mit einem Türschloss kombiniert werden.

Für diesen Sicherungsvorgang sind in einem Frachtraum bzw. der Ladefläche zugeordnet eine Mehrzahl von Spanneinrichtungen vorgesehen, die gleich ausgebildet sind. Jede Spanneinrichtung weist eine Schiene auf, In der sich eine Nut zum Führen des Gleitelementes befindet. Jeder Schiene ist auch ein Antrieb zugeordnet, mittels dem das Gleitelement bewegt werden kann. In einem bevorzugten Ausführungsbeispiel, jedoch nicht eingeschränkt darauf, soll das Gleitelement mit einem Seil verbunden sein, wobei dieses Seil wiederum auf eine Trommel aufwickelbar ist. Die Trommel sitzt auf der Drehachse eines Motors, ggl, unter Zwischenschaltung eines Getriebes. Damit ein Auf- und Abbewegen des Gleitelementes möglich ist, soll das Seil als Endlosseil ausgebildet sein und eine obere und untere Umlenkrolle in der Schiene umschlingen.

Jedem Antrieb bzw. jede Antriebseinheit ist ferner bevorzugt ein Endschalter zugeordnet, der auf einen erhöhten Seilzug reagiert. Beispielsweise kann dies ein mechanischer Endschalter sein, der durch eine Bewegung des Motors betätigt wird. Erhöht sich beispielsweise Zugbelastung auf das Seil, so wird über die Trommel der Motor gekippt und betätigt mechanisch einen Endschalter, Eleganter ist natürlich ein elektrischer Schalter, der auf einen erhöhten Zug und dadurch eine erhöhte Stromaufnahme reagiert, so dass nach Überschreiten eines bestimmten Schwellwertes der Motor abgeschaltet wird. Des weiteren beinhaltet jede Antriebseinheit auch eine Selbsthemmfunktion, die einem Verriegelungswiderstand entspricht. D.h., die entsprechenden Gleitelemente sind nach Erreichen ihrer Spannlage verriegelt und lösen sich nicht während dem Fahrbetrieb versehentlich.

Hervorzuheben ist bei der vorliegenden Erfindung vor allem, dass das System vollautomatisch arbeitet. Zur Auslösung sowohl des Sicherns als auch des Entsicherns der Ladung genügt die Betätigung eines Schalters, der an beliebiger Stelle angeordnet sein kann. Das ganze System ist selbstverständlich mit dem Zündschloss und/oder mit einem Schloss einer Tür zum Frachtraum koppelbar.

Bevorzugt sind alle beweglichen Elemente, wie Gleitelement, Umlenkrollen, Motor, Getriebe usw. gekapselt und halten damit dem rauen Alltagsbetrieb stand.

Des weiteren ist der modulare Aufbau hervorzuheben, da die Spanneinrichtung an beliebiger Stelle in einem Frachtraum einsetzbar ist. Jede Spanneinrichtung besteht aus der Schiene, den oberen und unteren Umlenkrollen, dem Zugseil, dem Gleitelement, ggf. einer Kupplung für Sicherungselemente, der Antriebselement mit Schaltungselektrik und der Trommel für das Seil.

Des weiteren wird Schutz auch für ein Verfahren zum Sichern von Ladegut auf einer Ladefläche mittels einem streifen- oder flächenförmigen Sicherungselement begehrt, welches auf das Ladegut absenkbar ist, wobei es mit Gleitelementen in Verbindung steht, die entlang von etwa vertikal angeordneten Schienen führbar sind. Hervorzuheben ist, dass die Gleitelemente zumindest teilweise gemeinsam, jedoch mit jeweils einem eigenen Antrieb entlang den Schienen bewegt werden und ihre Bewegung entsprechend der Kraftaufnahme der einzelnen Antriebe gestoppt wird. Durch dieses erfindungsgemässe Verfahren findet ein sehr wirkungsvolles Verspannen von Ladegut auf der Ladefläche statt.

Des weiteren wird selbständig Schutz für eine besondere Ausgestaltung des flächigen Sicherungsalementes begehrt. Dieses soll aus einer Mehrzahl von Steifen bestehen, wobei ein Teil der Streifen dehnbar und ein anderer Teil der Streifen nicht dehnbar ist. Zumindest ein Teil der nicht dehnbaren Streifen überspannt die dehnbaren Streifen und Ist mit diesen verbunden, wobei allerdings die nicht dehnbaren Streifen zwischen den Verbindungsstellen mit den dehnbaren Streifen eine grössere Länge aufweisen. Diese Ausgestaltung bedeutet, dass zuerst die dehnbaren Streifen auf das Ladegut auftreffen, gespannt werden und das Ladegut auf die Ladefläche aufpressen. Erst wenn die nicht dehnbaren Streifen auf das Ladegut auftreffen, ist eine Erhöhung des Zurrdrucks nicht mehr möglich, in dieser Gebrauchslage ist jedoch das Ladegut bereits auf die Ladefläche gepresst.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Ansicht einer erfindungsgemässen Vorrichtung zum Sichern von Ladegut auf einer Ladefläche eines schematisch angedeuteten Transportfahrzeugs;
**Figur 2** einer vergrössert dargestellte perspektivische Ansicht eines Teils einer erfindungsgemässen Spanneinrichtung für ein streifen- oder flächenförmiges Sicherungselement;
**Figur 3** eine Draufsicht auf einen Ausschnitt aus einem erfindungsgemässen Sicherungselement.

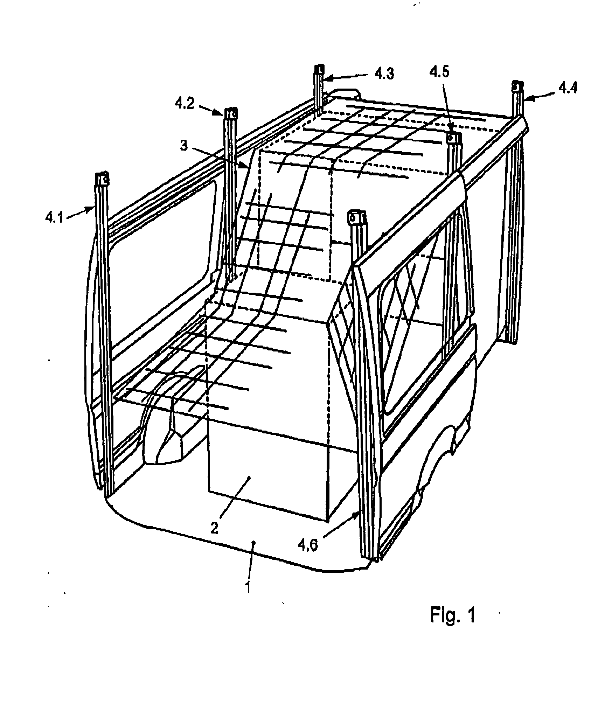

Gemäss Figur 1 sind auf einer Ladefläche 1 eines Transportfahrzeugs eine Mehrzahl von Ladegüter 2 angeordnet. Diese Ladegüter 2 sollen mittels eines streifen- oder flächenförmigen Sicherungselementes 3 gesichert werden. Hierzu sind eine Mehrzahl von Spanneinrichtungen 4.1 bis 4.6 vorgesehen, in Figur 1 sind es insgesamt sechs, wobei sich jeweils drei Spanneinrichtungen gegenüberliegen. In diesem Ausführungsbeispiel sind sechs Spanneinrichtungen gezeigt, es können auch mehr oder weniger, auch ungeradzahlige sein.

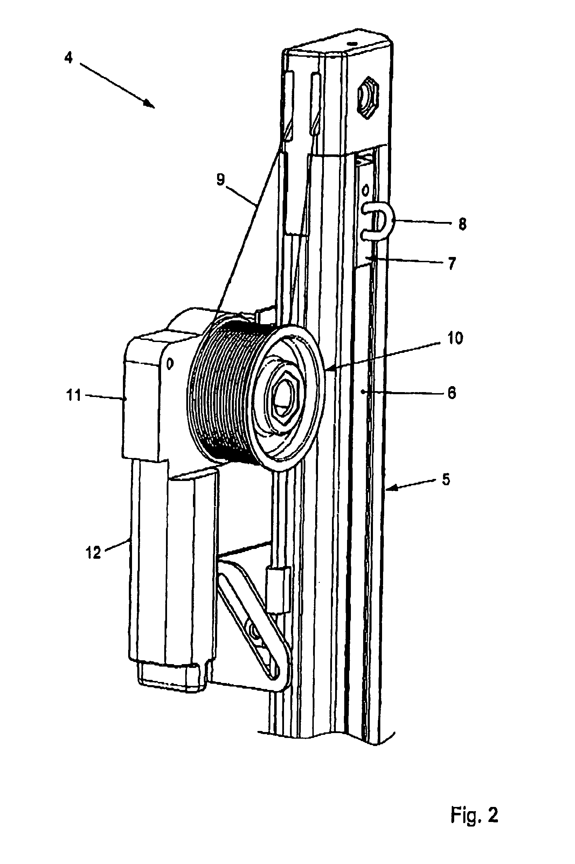

Ein wesentlicher Ausschnitt aus einer derartigen Spanneinrichtung 4 ist in Figur 2 angedeutet, Hierzu ist eine Vertikalschiene 5 vorgesehen, die eine Längsnut 6 aufweist. In dieser Längsnut 6 ist ein Gleitelement 7 verschiebbar angeordnet. Dabei weist das Gleitelement 7 eine Halterung 8 auf, mit der das Sicherungselement 3 entweder direkt oder über ein Band od. dgl. verbunden wird. Das Gleitelement 7 ist entlang der Schiene 5 verschiebbar angeordnet. Zum Bewegen des Gleltelements 7 entlang der Schiene 5 bzw. in der Langsnut 6 ist ein endloses Seil 9 vorgesehen, das auf einer Trommel 10 aufgewickelt ist. Diese Trommel 10 wird über ein entsprechendes Getriebe 11 von einem Motor 12 angetrieben, wobei die Drehrichtung des Motors 12 wechseln kann, so dass das Gleitelement 7 in beide Richtungen entlang der Schiene 5 verfahrbar ist.

In einem bevorzugten, nicht näher gezeigten Ausführungsbeispiel soll der Motor 12 ggt, zusammen mit dem Getriebe 11 und der Trommel 10 kippbar der Schiene zugeordnet sein.

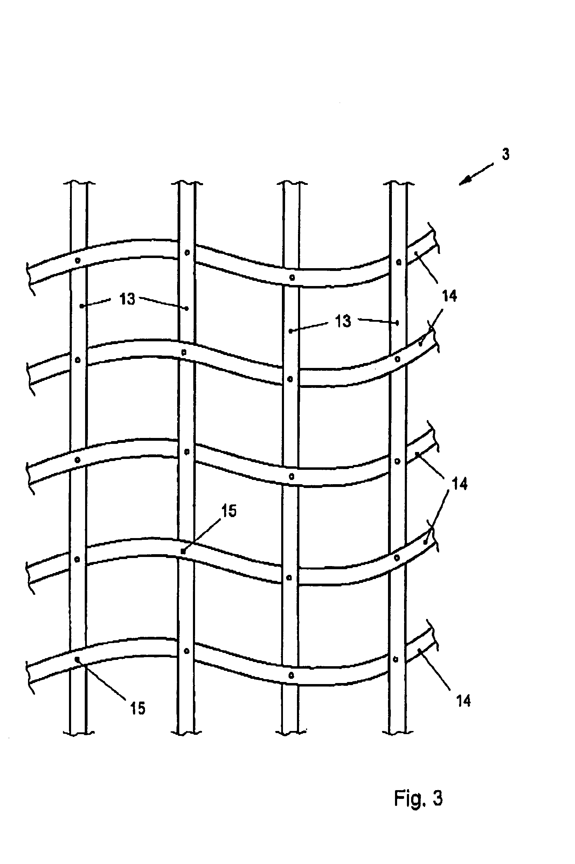

In einem bevorzugten Ausführungsbelspiel Ist das Sicherungselement 3 gemäss Figur 3 aus einzelnen Streifen gebildet. Dabei sind dehnbare Streifen 13 vorgesehen, die über nicht dehnbare Streifen 14 miteinander verbunden sind. Erfindungsgemäss sollen die nicht dehnbaren Streifen 14 zwischen Verbindungsstellen 15 länger als der direkte Abstand der Verbindungsstellen 15 ausgebildet sein, so dass sie bevorzugt nach oben abstehen und eine Kopffreiheit bei zur Decke des Laderaums angehobenem Sicherheitselement 3 gewährlelsten. Zu diesem Zweck sind die dehnbaren Streifen 13 in einer deckennahen Lage auch leicht vorgespannt.

Die Funktionsweise der vorliegenden Erfindung ist folgende:
In Ausgangslage befindet sich das Sicherungselement 3 in angehobener Lage kurz unterhalb der Decke des Frachtraumes. Sämtliche Gleitelemente 7 sind ebenfalls angehoben. Die nicht dehnbaren Streifen 14 befinden sich zwischen der Decke des Laderaums und den dehnbaren Streifen 13. Nunmehr kann die Ladefläche 1 ohne Schwierigkeiten mit dem Ladegut 2 belegt werden.

Zum Sichern des Ladegutes 2 wird ein Schalter betätigt, der jeden Motor 12 an jeder Spanneinrichtung 4.1 bis 4,6 anspricht. Hierdurch werden die entsprechenden Gleitelemente 7 mit Hilfe des Sells 9 entlang den Schienen 5 nach unten bewegt, wobei dies bei den Gleitelementen für die Spanneinrichtungen 4.2, 4.3, 4.4 und 4.5 nur über eine kurze Strecke erfolgen kann, da das Ladegut 2 sehr hoch ist. Auf das Ladegut treffen zuerst die dehnbaren Streifen 13 des Sicherungselementes 3 auf, so dass die Kraftaufnahme der entsprechenden Motoren für die Spanneinrichtungen 4.2 bis 4.5 noch nicht sehr hoch ist. Die Motoren bewegen die entsprechenden Gleitelemente tiefer, wodurch die dehnbaren Streifen 13 auf das Ladegut aufgedrückt werden, bis sie soweit ausgedehnt sind, dass die nicht dehnbaren Streifen 14 nunmehr auf das Ladegut auftreffen. Dies ist möglich, da die nicht dehnbaren Streifen zwischen den dehnbaren Streifen länger sind. Nunmehr erhöht sich aber die Kraftaufnahme der Motoren der Spanneinrichtungen 4.2 bis 4.5 derart, dass durch die höhere Stromaufnahme ein elektrischer Schalter betätigt wird, welcher die Motoren der Spanneinrichtungen 4.2 bis 4,5 abschaltet. Anstatt dessen tritt in der Antriebseinheit eine Selbsthemmfunktion in Kraft, die einem zusätzlichen Verriegelungswiderstand entspricht, d.h., der erfolgte Zurreffekt kann sich auch bei Zusatzbelastungen im Fahrbetrieb, wie beispielsweise Bremsen, Kurvenfahrt, Rüttelstrecke od. dgl. nicht lösen.

Da das Ladegut 2 im vorderen Bereich der Ladefläche 1 eine geringere Höhe aufweist, bewegen sich die Gleitelemente 7 der Spanneinrichtungen 4,1 und 4.6 nach wie vor weiter nach unten, so dass das Sicherungselement 3 auch nach einer gewissen Strecke auf das tiefere Ladegut 2 auftritt. Auch hier treffen zuerst die dehnbaren Streifen 13 auf das Ladegut 2 auf, danach die nicht dehnbaren Streifen, wobei das Ladegut bereits durch die dehnbaren Streifen fest auf die Ladefläche 1 aufgedrückt wird.

Für das Entladen werden wiederum sämtliche Motoren der Spanneinrichtungen 4.1 bis 4.6 gleichzeitig in Gang gesetzt, so dass die ihnen zugeordneten Gleitelemente 7 an den Schienen 5 aufsteigen. Sie treffen oben dann auf entsprechende Endschalter, durch welche die Motoren abgeschaltet werden.

**Bezugszeichenliste**

| | | | | | |
|---|---|---|---|---|---|
| 1 | Ladefläche | 34 | | 67 | |
| 2 | Ladegut | 35 | | 68 | |
| 3 | Sicherungselement | 36 | | 69 | |
| 4 | Spanneinrichtung | 37 | | 70 | |
| 5 | Schiene | 38 | | 71 | |
| 6 | Längsnut | 39 | | 72 | |
| 7 | Gleitelement | 40 | | 73 | |
| 8 | Halterung | 41 | | 74 | |
| 9 | Sell | 42 | | 75 | |
| 10 | Trommel | 43 | | 76 | |
| 11 | Getriebe | 44 | | 77 | |
| 12 | Motor | 45 | | 78 | |
| 13 | dehnbaren Streifen | 46 | | 79 | |
| 14 | nicht dehnbaren Streifen | 47 | | | |
| 15 | Verbindungsstellen | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Sichern von Ladegut (2) auf einer Ladefläche (1) mittels einem streifen- oder flächenförmigen Sicherungselement (3), welches auf das Ladegut (2) absenkbar ist, wobei das Sicherungselement (3) mit Gleitelementen (7) in Verbindung steht, die entlang von etwa vertikal angeordneten Schienen (5) geführt sind, wobei jedem Gleitelement (7) ein motorischer, insbesondere elektromotorischer Antrieb (12) bzw. eine Antriebseinheit (11, 12) zugeordnet ist
**dadurch gekennzeichnet,**
**dass** das Gleitelement (7) mit einem Seil (9) als Endlosseil verbunden ist und dieses eine obere und untere Umlenkungrolle in der Schiene (5) umschlingt.

2. Vorrichtung nach Anspruch 1, **dadurch gekennzeichnet, dass** das Seil (9) auf einer Trommel (10) aufwickelbar ist.

3. Vorrichtung nach Anspruch 2, **dadurch gekennzeichnet, dass** die Trommel (10) auf einer Drehachse des Antriebs (12) sitzt.

4. Vorrichtung nach wenigstens einem der Ansprüche 1 bis 3, **dadurch gekennzeichnet, dass** das Seil (9) als Endlosseil ausgebildet ist.

5. Vorrichtung nach wenigstens einem der Ansprüche 1 bis 4, **dadurch gekennzeichnet, dass** der Antriebseinheit (11, 12) ein Endschalter zugeordnet ist.

6. Vorrichtung nach wenigstens einem der Ansprüche 1 bis 5, **dadurch gekennzeichnet, dass** der Antrieb (12) bzw. die Antriebseinheit bei erhöhtem Seilzug einen Endschalter betätigt.

7. Vorrichtung nach wenigstens einem der Ansprüche 1 bis 6, **dadurch gekennzeichnet, dass** das Gleitelement (7) als Gleitschuh ausgebildet ist, dass in einer hinterschnittenen Nut (6) der Schiene (5) führbar ist.

8. Vorrichtung nach wenigstens einem der Ansprüche 1 bis 7, **dadurch gekennzeichnet, dass** das Sicherungselement (3) mit einer Mehrzahl von Gleitelementen (7) verbunden ist.

9. Vorrichtung nach Anspruch 8, **dadurch gekennzeichnet, dass** jedes Gleitelement (7) selbständig bewegbar ist.

10. Vorrichtung nach Anspruch 9, **dadurch gekennzeichnet, dass** die Antriebe (12) gemeinsam betätigbar sind.

11. Vorrichtung nach wenigstens einem der Ansprüche 1-10, **dadurch gekennzeichnet, dass** jedem Antrieb (12) ein elektrischer Schalter zugeordnet ist.

12. Vorrichtung nach Anspruch 11 oder 11, **dadurch gekennzeichnet, dass** jeder Antriebseinheit (11, 12) eine Selbsthemmfunktion beinhaltet.

13. Vorrichtung nach einem der vorhergehenden Ansprüche, **dadurch gekennzeichnet, dass** ein Teil der Streifen des Sicherungselementes (3) dehnbar und ein anderer Teil der Streifen nicht dehnbar ist.

14. Vorrichtung nach Anspruch 13, **dadurch gekennzeichnet, dass** zumindest ein Teil der nicht dehnbaren Streifen (14) die dehnbaren Streifen (13) überspannt und mit diesen verbunden ist.

15. Vorrichtung nach Anspruch 14, **dadurch gekennzeichnet, dass** die nicht dehnbaren Streifen (14) zwischen den Verbindungsstellen (15) mit den dehnbaren Streifen (13) länger als diese sind.

16. Verfahren zum Sichern von Ladegut (2) auf einer Ladefläche (1) mittels einem streifen- oder flächenförmigen Sicherungselement (3), welches auf das Ladegut (2) absenkbar ist, wobei es das Sicherungselement (3) mit Gleitelemente (7) in Verbindung steht, die entlang von etwa vertikal angeordneten Schienen (5) geführt, sind **dadurch gekennzeichnet, dass** die Gleitelemente (7) die mit einem Seil als Endlosseil verbunden sind und dieses eine obere und untere Umlenkungsrolle in der Schiene (5) umschlingt, zumindest teilweise gemeinsam, jedoch mit jeweils einem eigenen Antrieb entlang den Schienen (5) bewegt werden und deren Bewegung entsprechend der Kraftaufnahme der einzelnen Antriebe gestoppt wird.

## Claims

1. A device for securing cargo (2) on a loading surface (1) by means of a strip-shaped or sheet-shaped securing element (3) which can be lowered onto the cargo (2), the securing element (3) being connected to sliding elements (7) which are guided along approximately vertically arranged rails (5), each sliding element (7) being allocated a motor-driven, in particular electric-motor-driven, drive (12) or a drive unit (11, 12),
**characterised in that**
the sliding element (7) is connected to a cable (9) as endless cable, and this cable winds around an upper and lower deflecting roller in the rail (5).

2. A device according to Claim 1, **characterised in that** that the cable (9) can be wound up on a drum (10).

3. A device according to Claim 2, **characterised in that** the drum (10) is seated on a rotation axle of the drive (12).

4. A device according to at least one of Claims 1 to 3, **characterised in that** the cable (9) is formed as an endless cable.

5. A device according to at least one of Claims 1 to 4, **characterised in that** a limit switch is associated with the drive unit (11, 12).

6. A device according to at least one of Claims 1 to 5, **characterised in that** the drive (12) or the drive unit activates a limit switch when the cable pull is elevated.

7. A device according to at least one of Claims 1 to 6, **characterised in that** the sliding element (7) is formed as a sliding block which can be guided in an undercut groove (6) in the rail (5).

8. A device according to at least one of Claims 1 to 7, **characterised in that** the securing element (3) is connected to a plurality of sliding elements (7).

9. A device according to Claim 8, **characterised in that** each sliding element (7) is independently movable.

10. A device according to Claim 9, **characterised in that** the drives (12) can be activated jointly.

11. A device according to at least one of Claims 1-10, **characterised in that** an electric switch is associated with each drive (12).

12. A device according to Claim 10 or 11, **characterised in that** each drive unit (11, 12) comprises a self-locking function.

13. A device according to one of the preceding claims, **characterised in that** a part of the strips of the securing element (3) is expandable and another part of the strips is non-expandable.

14. A device according to Claim 13, **characterised in that** at least a part of the non-expandable strips (14) stretches over the expandable strips (13) and is connected thereto.

15. A device according to Claim 14, **characterised in that** the non-expandable strips (14) between the connection points (15) with the expandable strips (13) are longer than the latter.

16. A method for securing cargo (2) on a loading surface (1) by means of a strip-shaped or sheet-shaped securing element (3) which can be lowered onto the cargo (2), the securing element (3) being connected to sliding elements (7) which are guided along approximately vertically arranged rails (5), **characterised in that** the sliding elements (7) which are connected to a cable as endless cable, and said cable winds around an upper and lower deflecting roller in the rail (5), are moved along the rails (5) at least partially jointly, but with in each case a separate drive, and the movement thereof is stopped corresponding to the power input of the individual drives.

## Revendications

1. Dispositif pour fixer le chargement (2) sur une surface de chargement (1) au moyen d'un élément de fixation (3) en forme de bande ou de surface qui peut être descendu sur le chargement (2), l'élément de fixation (3) étant en communication avec des éléments de glissement (7) qui sont guidés le long de rails (5) disposés environ verticalement, à chaque élément de glissement (7) étant associé un entraînement (12) ou une unité d'entraînement (11, 12) à moteur, en particulier à moteur électrique,
**caractérisé par le fait**
**que** l'élément de glissement (7) est connecté à une corde (9) comme corde sans fin et qu'il passe autour d'une poulie de renvoi supérieure et inférieure dans le rail (5).

2. Dispositif selon la revendication 1, **caractérisé par le fait que** la corde (9) peut s'enrouler sur un tambour (10).

3. Dispositif selon la revendication 2, **caractérisé par le fait que** le tambour (10) se trouve sur un axe de rotation de l'entraînement (12).

4. Dispositif selon au moins l'une des revendications 1 à 3, **caractérisé par le fait que** la corde (9) est réalisée sous forme de corde sans fin.

5. Dispositif selon au moins l'une des revendications 1 à 4, **caractérisé par le fait qu'**à l'unité d'entraînement (11, 12) est associé un interrupteur de fin de course.

6. Dispositif selon au moins l'une des revendications 1 à 5, **caractérisé par le fait que** l'entraînement (12) ou l'unité d'entraînement actionne un interrupteur de fin de course en cas de traction de corde augmentée.

7. Dispositif selon au moins l'une des revendications 1 à 6, **caractérisé par le fait que** l'élément de glissement (7) est réalisé sous forme de patin, qu'il peut être guidé dans une rainure (6) à contre-dépouille du rail (5).

8. Dispositif selon au moins l'une des revendications 1 à 7, **caractérisé par le fait que** l'élément de fixation (3) est connecté à une pluralité d'éléments de glissement (7).

9. Dispositif selon la revendication 8, **caractérisé par le fait que** chaque élément de glissement (7) est déplaçable de manière autonome.

10. Dispositif selon la revendication 9, **caractérisé par le fait que** les entraînements (12) sont actionnés ensemble.

11. Dispositif selon au moins l'une des revendications 1 à 10, **caractérisé par le fait qu'**à chaque entraînement (12) est associé un interrupteur électrique.

12. Dispositif selon la revendication 10 ou 11, **caractérisé par le fait que** chaque unité d'entraînement (11, 12) contient une fonction d'autofreinage.

13. Dispositif selon l'une des revendications précédentes, **caractérisé par le fait qu'**une partie des bandes de l'élément de fixation (3) est extensible et une autre partie des bandes n'est pas extensible.

14. Dispositif selon la revendication 13, **caractérisé par le fait qu'**au moins une partie des bandes non extensibles (14) surplombe les bandes extensibles (13) et est connectée à ces dernières.

15. Dispositif selon la revendication 14, **caractérisé par le fait que** les bandes non extensibles (14) entre les points de connexion (15) avec les bandes extensibles (13) sont plus longues que ces dernières.

16. Procédé pour fixer le chargement (2) sur une surface de chargement (1) au moyen d'un élément de fixation (3) en forme de bandes ou de surfaces qui peut être descendu sur le chargement (2), l'élément de fixation (3) étant en communication avec les éléments de glissement (7) qui sont guidés le long de rails (5) disposés environ verticalement, **caractérisé par le fait que** les éléments de glissement (7), qui sont connectés à une corde comme corde sans fin et cette dernière passant autour d'une poulie de renvoi supérieure et inférieure dans le rail (5), sont déplacés au moins partiellement ensemble, toutefois chacun avec un entraînement propre le long des rails (5) et dont le déplacement est arrêté selon l'absorption des différents entraînements.
